(19) **Europäisches Patentamt**

**European Patent Office**

**Office européen des brevets**

(11) **EP 0 644 672 B1**

(12) **EUROPÄISCHE PATENTSCHRIFT**

(45) Veröffentlichungstag und Bekanntmachung des Hinweises auf die Patenterteilung:
**21.06.2000 Patentblatt 2000/25**

(51) Int. Cl.[7]: **H04J 3/14**, H04J 3/16, H04J 3/07

(21) Anmeldenummer: **94202353.2**

(22) Anmeldetag: **18.08.1994**

(54) **Messvorrichtung für ein synchrones Übertragungssystem**

Measuring device for a synchronous transmission system

Appareil de mesure pour système de transmission synchrone

(84) Benannte Vertragsstaaten:
**DE FR GB**

(30) Priorität: **28.08.1993 DE 4329041**

(43) Veröffentlichungstag der Anmeldung:
**22.03.1995 Patentblatt 1995/12**

(73) Patentinhaber:
**LUCENT TECHNOLOGIES INC.**
**Murray Hill, New Jersey 07974-0636 (US)**

(72) Erfinder:
**Urbansky, Ralph, Dr. Ing.**
**D-20097 Hamburg (DE)**

(74) Vertreter:
**Buckley, Christopher Simon Thirsk**
**Lucent Technologies (UK) Ltd,**
**5 Mornington Road**
**Woodford Green, Essex IG8 0TU (GB)**

(56) Entgegenhaltungen:
**EP-A- 0 435 384          EP-A- 0 443 029**

• **NTZ NACHRICHTEN TECHNISCHE ZEITSCHRIFT, Bd.46, Nr.2, 1. Februar 1993, BERLIN DE Seiten S92 - 96, XP298896 ROLAND KIEFER 'Messaufgaben an SDH Übertragungssystemen'**

**Beschreibung**

Die Erfindung bezieht sich auf eine Meßvorrichtung zum Messen der Phasenabweichung wenigstens einer untergeordneten Transporteinheit eines über ein synchrones Übertragungssystem übertragenen synchronen Signals. In einem synchronen Übertragungssystem, das ein System der synchronen digitalen Hierachie oder das amerikanische System SONET (Synchronous Optical Network) sein kann, wird die Zusammenfügung, Aufteilung, Abzweigung, Einspeisung oder Umleitung beliebiger Signalbündel ermöglicht. Beispielsweise können die in einem Netzknoten der synchronen digitalen Hierachie einlaufenden plesiochronen Nutzkanalsignalströme (in Europa: 2,048 Mbit/s, 34,368 Mbit/s und 139,264 Mbit/s) mit einer Abbildungsvorschrift (Mapping) so aufbereitet werden, daß sie immer in einem einheitlichen 125 μs-langen synchronen Transportrahmen (STM-1-Rahmen) als STM-1-Signal mit der Bitrate von 155,52 Mbit/s auf den Übertragungsweg geschickt werden.
Ein solcher Netzknoten kann ebenfalls die durch Multiplexbildung von STM-1-Signalen entstehenden höherbitratigen STM-N-Signale
(N = 4, 16, ...) empfangen und weiterverarbeiten. Das STM-1-Signal ist nach Rahmen strukturiert und weist außer den eigentlichen Nutzdaten des Signals, Steuerinformation und Stopfdaten auf. Ein STM-1-Rahmen besteht aus 270 Spalten und 9 Zeilen (pro Zeile 270 Bytes). In den Zeilen 1 bis 3 und 5 bis 9, jeweils in den Spalten 1 bis 9, ist der "Section Overhead', (SOH) für Steuerungsund Fehlererkennungsinformationen und in dem restlichen Bereich (AU-Nutzdatenbereich = AU-Payload) Daten des Signals, Stopfdaten und weitere Steuerungsinformationen untergebracht.

In dem AU-Nutzdatenbereich können mehrere verschiedene Container (C-4, C-3, C-2, C-12 und C-11) untergebracht sein. Unter einem Container wird die Grundverpackungseinheit für digitale Nutzsignale verstanden. Beispielsweise kann in einem STM-1-Rahmen eine Verwaltungseinheit ("Administrative Unit") AU-4 mit einem Container C-4 für eine Bitrate von 139,264 Mbit/s eingebracht sein. Weiter können drei Verwaltungseinheiten AU-3 in dem STM-1-Rahmen untergebracht sein. Davon enthält z. B. eine Verwaltungseinheit AU-3 einen Container C-3 für eine Bitrate von 44,736 Mbit/s. Die zweite Verwaltungseinheit AU-3 kann beispielsweise 7 "Tributary Unit Groups" TUG-2 mit jeweils einem Container C-2 für eine Bitrate von 6,312 Mbit/s enthalten. In der dritten Verwaltungseinheit AU-3 können ferner 7 TUG-2 mit jeweils 3 Containern C-12 für eine Bitrate von 2,048 Mbit/s eingefügt sein. Aus den Containern werden durch Hinzufügung von Steuerinformationen und Stopfinformationen weitere Transporteinheiten (VC-4, VC-3, TU-3, TU-2, TU-12 und TU-11) gebildet.

Bei der übertragung einer untergeordneten Transporteinheit, die eine Transporteinheit eines plesiochronen Signals (z.B. 2,048 MBit/s) oder ein virtueller Container VC-2, VC-12 oder VC-11 sein kann, über mehrere synchrone digitale Vorrichtungen kommt es zu laufzeitbedingten Phasenverschiebungen zwischen dem in einem Synchronisierer gebildeten STM-1-Signal mit wenigstens einer untergeordneten Transporteinheit und dem in einem Desynchronisierer empfangenen STM-1-Signal mit der untergeordneten Transporteinheit. Weiter bewirken durch Frequenz- und Phasenschwankungen bedingte pufferfüllstandsabhängige Verschiebungen von Transporteinheiten, die eine Veränderung von wenigstens einem Pointerwert einer Transporteinheit und damit auch Stopfvorgänge hervorrufen, eine zusätzliche Phasenverschiebung der untergeordneten Transporteinheit.

Die zusätzliche Phasenverschiebung, die, wie oben erwähnt, durch eine Veränderung eines AU-Pointers (bei Verschiebung eines VC-3 oder V-4) oder eines TU-Pointers (bei Verschiebung eines VC-2, VC-12 oder VC-11) angegeben ist, muß bei 5 der Desynchronisation berücksichtigt werden.

Eine Meßvorrichtung für ein SDH-System ist beispielsweise aus dem Aufsatz "2,5-GBit/s-Leitungsausrüstung im Projekt Berlin V", ntz, Band 44, 1991, Heft 11, Seiten 782-788, bekannt. Aus Bild 7 der Veröffentlichung läßt sich das Blockschaltbild dieser Meßvorrichtung entnehmen. Ein SDH-Analysator (Sendeeinheit) bildet ein STM-1-Signal, das einem SDH-System zugeführt wird. In dem SDH-System wird mittels eines Multiplexers aus mehreren STM-1-Signalen ein STM-16-Signal gebildet, über einen optischen Sender und einem Lichtwellenleiter zu einem optischen Empfänger des SDH-Systems geführt. Vom optischen Empfänger aus wird über einen Demultiplexer das gewonnene STM-1-Signal der Empfängereinheit (Empfangseinheit) des SDH-Analysators zugeführt. Des weiteren ist noch ein Frequenzzähler und ein Personal Computer vorhanden, mit deren Hilfe die Phasenabweichung zwischen gesendetem und empfangenem STM-1-Signal festgestellt werden soll. Das vom SDH-Analysator abgegebene STM-1-Signal wird mittels eines Schreibtaktsignals mit einer ersten Frequenz in den Multiplexer des SDH-Systems eingeschrieben. Aus dem Multiplexer wird das STM-1-Signal mittels eines Auslesetaktsignals mit einer zweiten Frequenz ausgelesen. Beim Demultiplexer sind die Verhältnisse genau umgekehrt. Das Auslesetaktsignal des Multiplexers wird hier als Schreibtaktsignal und das Schreibtaktsignal des Multiplexers als Auslesetaktsignal verwendet. Mit Hilfe dieser Meßvorrichtung kann nur die Phasenabweichung des virtuellen Containers VC-4 im STM-1-Signal nach Durchlaufen des SDH-Systems festgestellt werden. Eine Phasenabweichung einer das SDH-System durchlaufenden untergeordneten Transporteinheit kann nicht gemessen werden.

Aus dem Aufsatz "Meßaufgaben an SDH-Übertragungssytemen", ntz Nachrichtentechnische Zeitschrift, Band 46, Nr, 2, 1. Februar 1993, Berlin, Seiten 92 bis 96, ist eine Meßvorrichtung mit einem Analysator bekannt, der mittels eines Mustervergleiches Bitfehler, die Laufzeit oder Bitverschiebungen eines 2-Mbit/s-Nutzsignales messen kann. Weitergehende Offenbarungen des Schaltungsaufbaues der bekannten Meßvorrichtung sind dem Aufsatz nicht zu entnehmen.

Aus der EP-A-0 435 348 ist eine Schaltungsanordnung zur Bitratenanpassung bekannt, die einen elastischen Speicher aufweist, in den Nutzdaten eines nach Rahmen strukturierten Signales mit einem Schreibzähler eingeschrieben und mit einem Lesezähler wieder ausgelesen werden. Damit die ausgelesenen Nutzdaten innerhalb vorgeschriebener Toleranzgrenzen bleiben, wird die Auslesegeschwindigkeit korrigiert. Die Schaltungsanordnung ist jedoch nicht dazu geeignet, Phasenabweichungen von Nutzdaten im rahmenstrukturierten Signal nach Durchlaufen eines SDH-Systems festzustellen.

Der Erfindung liegt daher die Aufgabe zugrunde, eine Meßvorrichtung zu schaffen, mit deren Hilfe die Phasenabweichung von untergeordneten Transporteinheiten bestimmt werden kann.

Die Erfindung wird bei einer Meßvorrichtung zum Messen der Phasenabweichung wenigstens einer untergeordneten

Transporteinheit eines über ein synchrones übertragungssystem übertragenen synchronen Signals durch folgende Merkmale gelöst:

Die Meßvorrichtung enthält

- eine Sendeeinheit zur Bildung des zu sendenden synchronen Signals,
- einen ersten Desynchronisierer zur Zwischenspeicherung von im zugeführten synchronen Signal enthaltenden Daten der untergeordneten Transporteinheit und zur Erzeugung eines Startsignals nach der Detektierung wenigstens eines vorgegebenen Bytes der untergeordneten Transporteinheit;
- einen zweiten Desynchronisierer zur Zwischenspeicherung der im empfangenen, das Übertragungssystem durchlaufenden synchronen Signal enthaltenden Daten der untergeordneten Transporteinheit und zur Erzeugung eines Stoppsignals nach der Detektierung wenigstens des vorgegebenen Bytes der untergeordneten Transporteinheit im empfangenen synchronen Signal; und
- eine Auswerteeinheit, die unter Ansprechen auf das Start- und Stoppsignal die Phasenabweichung der untergeordneten Transporteinheit berechnet.

Mit der erfindungsgemäßen Meßvorrichtung wird die Phasenabweichung zwischen der Transporteinheit eines synchronen Signals und der Transporteinheit des empfangenen, über ein synchrones übertragungssystem gelaufenen synchronen Signals gemessen. Die Phasenabweichung setzt sich dabei aus einer laufzeitabhängigen und einer durch Frequenz- und Phasenschwankungen bedingten pufferfüllstandsabhängigen Verschiebung zusammen. In Vorrichtungen des synchronen Übertragungssystems werden nämlich Taktanpassungen aufgrund von Frequenz- und Phasenschwankungen zwischen einem aus dem ankommenden synchronen Signal gewonnenen Schreibtaktsignal und einem lokal erzeugten Lesetaktsignal mittels eines Pufferspeichers durchgeführt.

Die Messung der Phasenabweichung beispielsweise einer Transporteinheit VC-12 in einem STM-1-Signal könnte folgendermaßen ausgeführt werden:

Zuerst wird der Zeitpunkt des Beginns der Transporteinheit VC-12 in einem STM-1-Rahmen bestimmt, ohne daß diese Transporteinheit vorher in einem ersten Desynchronisierer gewonnen worden ist. Nach Durchlaufen des synchronen Übertragungssystems wird der Beginn der Transporteinheit VC-12 im empfangenen STM-1-Rahmen gemessen (Mustererkennung im STM-1-Signal). Durch Differenzbildung ergibt sich dann die gemessene Laufzeit, die in eine Phasenabweichung umgerechnet werden kann. Wurde in dem synchronen Übertragungssystem eine Verschiebung einer übergeordneten Transporteinheit (VC-4 oder VC-3), welche die untergeordnete Transporteinheit VC-12 enthält, und damit eine Veränderung des AU-Pointerwertes bewirkt, so kann sich eine fehlerhaft gemessene Phasenabweichung ergeben. Diese fehlerhaft gemessene Phasenabweichung wird durch die Verschiebung der Bytes des Section Overhead (SOH) relativ zur Transporteinheit VC-12 bewirkt.

Die erfindungsgemäße Meßvorrichtung verhindert eine solche Fehlmessung, indem nur in dem ersten und zweiten Desynchronisierer aufgelöste Bytes (z.B. durch Stopfvorgänge bewirkte Datenlücken glätten) einer untergeordneten Transporteinheit in einer Auswerteeinheit zur Ermittlung der Phasenabweichung herangezogen werden.

Eine Ausführungsform des ersten und zweiten Desynchronisierers enthält wenigstens

- einen Pufferspeicher zur Zwischenspeicherung von im zugeführten synchronen Signal enthaltenen Daten einer untergeordneten Transporteinheit,
- einen Schreibadressengenerator zum Empfang eines aus dem zugeführten synchronen Signal gewonnenen Schreibtaktsignals und zur Steuerung des Schreibvorgangs der Daten in den Pufferspeicher,
- eine Steueranordnung zur Bildung eines Steuersignals für den Schreibadressengenerator aus dem zugeführten synchronen Signal,
- einen Leseadressengenerator zur Steuerung des Lesevorgangs der Daten aus dem Pufferspeicher,
- eine Differenzanordnung zur Bildung von Differenzwerten aus den Adressen von Schreib- und Leseadressengenerator,

- eine Schaltung zur Erzeugung eines dem Leseadressengenerator zugeführten Lesetaktsignals aus den Differenzwerten und
- eine Detektionsschaltung zur Erkennung des vorgegebenen Bytes aus den aus dem Pufferspeicher ausgelesenen Bytes oder aus den in den Pufferspeicher zu schreibenden Bytes der untergeordneten Transporteinheit enthält.

Das Lesetaktsignal wird also mit einer Schaltung erzeugt, die einen lokalen Oszillator, einen Regler und ein Stellglied enthält. Der lokale Oszillator kann z.B. derselbe sein, der auch bei der Erzeugung des synchronen Signals in der Sendeeinheit verwendet wird. Ein Schreibtaktsignal wird aus dem dem Desynchronisierer zugeführten synchronen Signal gewonnen. Die aus dem Pufferspeicher ausgelesenen Bytes einer untergeordneten Transporteinheit werden einer Detektionsschaltung zugeführt, die das vorgegebene Byte beispielsweise durch eine Mustererkennung ermittelt. Hierbei können bestimmte Bytes eine vorgegebene Bitfolge aufweisen. Diese Mustererkennung kann auch vor dem Schreibvorgang in den Pufferspeicher vorgenommen werden. Dann werden nur die für die Mustererkennung erforderlichen Bytes in den Pufferspeicher eingeschrieben. Ein solcher Desynchronisierer ohne Mustererkennung ist beispielsweise aus der EP-A2-0 435 384 bekannt, bei dem eine Transporteinheit für ein synchrones plesiochrones Signal gewonnen wird.

Eine Ausführungsform für die Auswerteeinheit enthält einen Zähler. Hierbei ist der erste Desynchronisierer nach der Detektierung des vorgegebenen Bytes im gesendeten synchronen Signal zur Lieferung eines Startsignals zum und der zweite Desynchronisierer nach der Detektierung des vorgegebenen Bytes im empfangenen synchronen Signal zur Lieferung eines Stoppsignals zum Zähler vorgesehen.

Die Meßvorrichtung kann zur Messung der Phasenabweichung von untergeordneten Transporteinheiten eines STM-1-Signal der synchronen digitalen Hierachie (SDH) verwendet werden. Eine untergeordnete Transporteinheit ist dann ein virtueller Container VC-2, VC-12 oder VC-11 oder eine Transporteinheit eines plesiochronen in einem VC-2, VC-12 oder VC-11 transportierten Signals.

Ein Ausführungsbeispiel der Erfindung wird im folgenden anhand der Figuren näher erläutert. Es zeigen:

Fig. 1 den schematischen Aufbau eines virtuellen Containers VC-12,
Fig. 2 den schematischen Aufbau eines virtuellen Containers VC-4, in den mehrere VC-12 eingefügt sind,
Fig. 3 zwei aufeinanderfolgende schematisch skizzierte STM-1-Rahmen mit einem VC-4,
Fig. 4 zwei schematisch skizzierte STM-1-Rahmen vor und nach Durchlaufen eines synchronen Übertragungssystems,
Fig. 5 zwei weitere schematisch skizzierte STM-1-Rahmen vor und nach Durchlaufen eines synchronen Übertragungssystems,
Fig.6 ein Blockschaltbild einer Meßvorrichtung und
Fig.7 ein Blockschaltbild eines in der Meßvorrichtung verwendeten Desynchronisierers.

Zur Beurteilung der Funktionsfähigkeit eines synchronen Übertragungssystems (z.B. Übertragungssystem der synchronen digitalen Hierachie) kann die Messung der Phasenabweichung zwischen einer untergeordneten Transporteinheit, die dem Übertragungssystem zugeführt wird, und der empfangenen, das Übertragungssystem durchlaufenden, untergeordneten Transporteinheit erforderlich sein. Eine solche untergeordnete Transporteinheit kann beispielsweise ein virtueller Container VC-12 sein, der in einem STM-1-Signal der synchronen digitalen Hierachie transportiert wird.

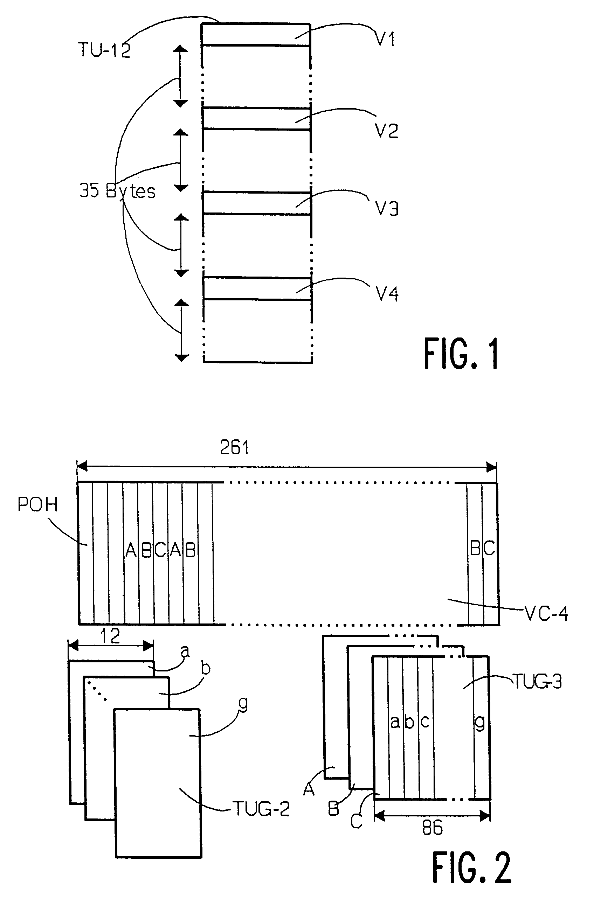

In Fig. 1 ist der Aufbau eines TU-12, der ein VC-12 enthält, schematisch dargestellt. Dieser weist vier V-Bytes (V1 bis V4) auf, die jeweils durch 35 Datenbytes getrennt sind. In den Bytes V1 und V2 ist der Pointerwert enthalten, der den Anfang eines VC-12 im TU-12 angibt. Der Beginn eines VC-12 in einer TU-12 wird durch das nicht dargestellte V5-Byte gekennzeichnet. Das V3-Byte ermöglicht negativ zu stopfen. Eine TU-12 wird in vier aufeinanderfolgenden STM-1-Rahmen transportiert. Daher beträgt die Dauer für die Übertragung eines TU-12 500 µs.

Die Bytes einer TU-12 werden spaltenweise in einer TUG-2 untergebracht. Die 4 Spalten (jeweils 9 Bytes in einer Spalte) von 3 TU-12 werden abwechselnd in einer TUG-2 zusammengefügt und sieben TUG-2 zu einem VC-3 oder einer TUG-3 zusammengesetzt. In Fig. 2 ist diese Verschachtelung gezeigt. Jede TUG-2 enthält 12 Spalten (jede Spalte enthält 9 Bytes), die ebenfalls abwechselnd in einer TUG-3 oder VC-3 untergebracht sind. Eine TUG-3, die 86 Spalten (jeweils 9 Bytes) enthält, weist in der ersten Spalte feste Stopfbytes und in den restlichen Spalten Bytes der Transporteinheit TU-12 auf.

Wie Fig. 2 weiter zeigt, werden die Bytes von drei TUG-3 in eine VC-4 eingefügt. Der VC-4 enthält in der ersten Spalte einen "Path Overhead" (POH) und in den beiden folgenden Spalten feste Stopfbytes. Ab der Spalte 4 werden jeweils abwechselnd Spalten der 3 TUG-3 eingefügt.

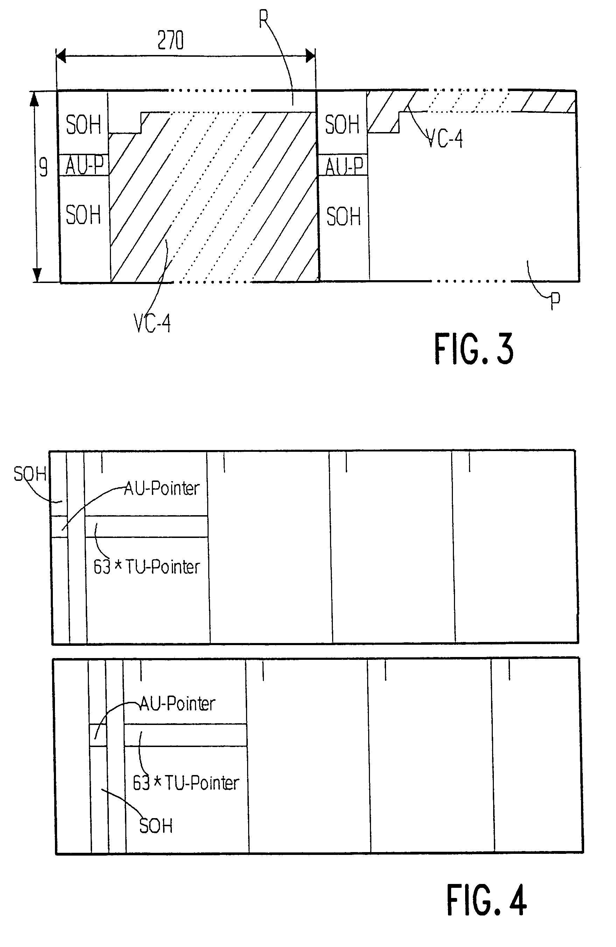

Die Einfügung eines VC-4 in zwei aufeinanderfolgende STM-1-Rahmen ist in Fig. 3 skizziert. Ein STM-1-Rahmen besteht aus 270 Spalten und 9 Zeilen (pro Zeile 270 Bytes). In den ersten 9 Spalten in den Zeilen 1 bis 3 und 5 bis 9 ist der "Section Overhead" (SOH) und in Zeile 4 der "AU-Pointer" (AU-P) untergebracht. In dem restlichen Bereich (AU-Nutzdatenbereich = P), in den Spalten 10 bis 270, sind Nutzdatenbytes, Stopfbytes und weitere Bytes für Steuerungsinformationen eingefügt. Der AU-Pointer AU-P enhält die Information über das erste Byte eines virtuellen Containers VC-4 bzw. VC-3, Stopfinformationen und weitere Steuerinformationen.

Das STM-1-Signal wird über ein Übertragungssystem der synchronen digitalen Hierachie gegeben, welches beispielsweise mehrere digitale Vorrichtungen enthält. In solchen Vorrichtungen finden aufgrund von Frequenz- und Phasenschwankungen zwischen einem aus einem empfangenen Signal gewonnenen Schreibtaktsignal und einem lokal erzeugten Lesetaktsignal mittels eines Pufferspeichers, in den die ankommenden Daten eingeschrieben und zwischengespeichert werden, Anpassungsvorgänge statt. Hierbei kann sich dann z.B. auch der virtuelle Container VC-4 (übergeordnete Transporteinheit) verschieben. Durch die Verschiebung des VC-4 ergibt sich eine Veränderung des AU-Pointerwertes und es findet ein Stopfvorgang statt. In einer nachfolgenden Vorrichtung des Übertragungssystems kann ebenso eine Taktanpassung vorgenommen werden. Wird dabei eine Verschiebung des VC-12 bewirkt und somit der TU-12-Pointerwert verändert, ergibt sich ein Stopfvorgang in der TU-12 (Taktanpassung mit TU-12-Pointerbytes).

Es hat sich gezeigt, daß durch Taktanpassungen bedingte Phasenverschiebungen zwischen dem gesendeten und dem empfangenen Signal in der Regel nicht korrekt gemessen werden, wenn jeweils die Bytes einer untergeordneten Transporteinheit (z.B. VC-12) im STM-1-Rahmen zur Phasenmessung herangezogen werden.

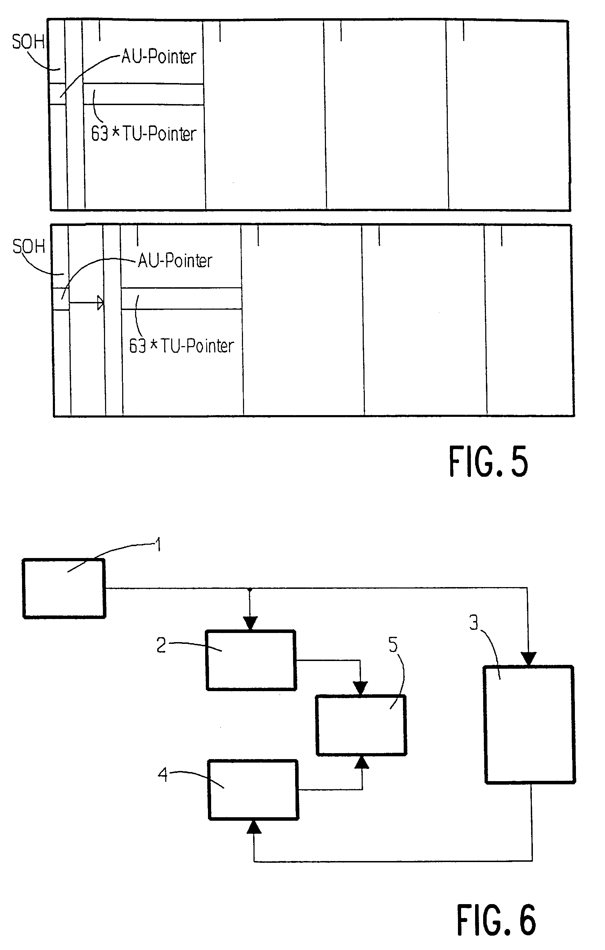

Dies kann anhand der Fig. 4 und 5 näher erläutert werden. In den jeweiligen Figuren ist oben ein gesendeter STM-1-Rahmen abgebildet, der insgesamt in einem VC-4 63 * VC-12 enthält. Die ersten, zweiten, dritten und vierten Spalten der VC-12 sind jeweils durch einen senkrechten Strich getrennt. Eine beispielhafte Lage von TU-Pointerbytes (TU-Pointer) ist ebenfalls abgebildet. Ein bestimmtes Byte eines VC-12 ist jeweils durch einen kleinen Strich gekennzeichnet. Der in den jeweiligen Figuren unten abgebildete STM-1-Rahmen hat das synchrone Übertragungssystem durchlaufen.

Der von dem Übertragungssystem abgegebene Rahmen nach der Fig. 4 weist nur eine durch Laufzeitverschiebungen verursachte Phasenverschiebung von 18 STM-1-Bytes bei 2430 STM-1-Bytes des STM-1-Rahmens (Rahmendauer: 125 μs) auf:

$$\frac{18 \text{ Bytes}_{STM-1} * 125 \text{ μs}}{2430 \text{ Bytes}_{STM-1}} \approx 0,93 \text{ μs}.$$

Das Übertragungssystem führt dabei in der oder den Stopfentscheidungsschaltungen des Übertragungssystems eine Mittelwertbildung über den zeitlichen Verlauf des Pufferfüllstandes durch (vgl. z.B. das in der EP-A2-0 503 732 beschriebene Übertragungssystem). Wird die Phasenverschiebung auf die VC-12-Bytes (35 Bytes pro STM-1-Rahmen) bezogen, ergibt sich eine mittlere Phasenverschiebung von:

$$\frac{0,26 \text{ Bytes}_{VC-12} * 125 \text{ μs}}{35 \text{ Bytes}_{VC-12}} \approx 0,93 \text{ μs}$$

$$\text{mit } \frac{35 \text{ Bytes}_{VC-12} * 18 \text{ Bytes}_{STM-1}}{2430 \text{ Bytes}_{STM-1}} \approx 0,26 \text{ Bytes}_{VC-12} \, .$$

Die 0,26 Bytes$_{VC-12}$ stellen die mittlere Phasenverschiebung oder auch den Pufferfüllstand für die jeweilige Transporteinheit VC-12 dar. Bei diesem Beispiel wird die korrekte Phasenverschiebung gemessen.

In Fig. 5 weist das im Desynchronisierer empfangene STM-1-Signal den AU-4-Pointerwert 6 (18 Byte-Verschiebung) auf. Die auf die VC-12-Bytes bezogene mittlere Phasenverschiebung beträgt (vgl. obige Rechnung) ≈0,26 VC-12-Bytes (≈0,93 μs). Es ergibt sich jedoch die richtige mittlere Phasenverschiebung durch Bezugnahme auf die VC-4-Bytes. Diese beträgt 18 VC-4-Bytes:

$$\frac{18 \text{ Bytes}_{VC-4} * 125 \text{ μs}}{2349 \text{ Bytes}_{VC-4}} \approx 0,96 \text{ μs} \, .$$

Bei diesem Beispiel wird bei der Phasenmessung die Phasenverschiebung nicht korrekt ermittelt. Die korrekte Phasenverschiebung kann mittels der in der Fig. 6 beschriebenen Meßvorrichtung gemessen werden.

Die Meßvorrichtung in Fig. 6 enthält eine Sendeeinheit 1, die ein STM-1-Signal mit beispielsweise insgesamt 63 VC-12, wie das in den Fig. 1 bis 3 dargestellt ist, erzeugt. Als Sendeeinheit kann beispielsweise ein Analysator aus der Meßvorrichtung verwendet werden, die aus dem Aufsatz "2,5-Gbit/s-Leitungsausrüstung in Projekt Berlin V", ntz, Band 44, 1991, Heft 11, Seiten 782 bis 788, bekannt ist. Das STM-1-Signal wird einem ersten Desynchronisierer 2 und einem Übertragungssystem 3 der synchronen digitalen Hierachie zugeführt. Das Übertragungssystem 3 kann beispielsweise eine digitale sychrone Vorrichtung mit einer Taktanpassung enthalten, bei der eine Frequenz- und/oder Phasenschwankung durch eine Verschiebung des VC-4 ausgeglichen wird. Das von dem Übertragungssystem 3 abgegebene STM-1-Signal wird einem zweiten Desynchronisierer 4 zugeleitet, der ebenso wie der erste Desynchronisierer 2 aus dem STM-1-Signal die Bytes eines VC-12 durch Auflösung des STM-1-Signals gewinnt. Bei Auftreten eines vorgegebenen Bytes der untergordneten Transporteinheit VC-12 wird von dem ersten Desynchronisierer 2 ein Startsignal und von dem zweiten Desynchronisierer 4 ein Stoppsignal an eine Auswerteeinheit 5 gesendet, die einen nicht näher dargestellten Zähler und eine nicht näher dargestellte Auswerteeinheit enthält. Der Zähler wird von einem ebenfalls nicht dargestellten Taktgenerator mit einem Taktsignal beliefert. Dieses Taktsignal kann beispielsweise auch aus dem Taktsignal des die Sendeeinheit 1 steuernden Taktgenerators geliefert werden. Wenn der Zähler in der Auswerteeinheit 5 ein Startsignal von dem ersten Desynchronisierer 2 erhält, wird der Zähler gestartet, und angehalten, wenn der Zähler ein Stoppsignal von dem zweiten Desynchronisierer 4 erhält.

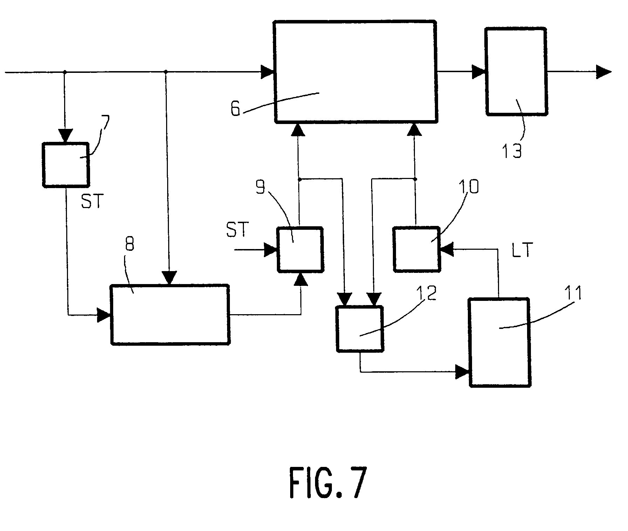

Ein Beispiel für den ersten und zweiten Desynchronisierer 2 und 4 ist in der Fig. 7 näher dargestellt. Ein Pufferspeicher 6 empfängt die in einem STM-1-Signal transportierten Bytes einer untergordneten Transporteinheit VC-12, deren Bytes in einer TU-12 eingefügt sind. Die Bytes der TU-12 werden, wie oben erwähnt, in dem STM-1-Signal transportiert. Aus dem STM-1-Signal wird mittels einer Schaltung 7 zur Taktrückgewinnung ein Schreibtaktsignal ST mit einer Frequenz von ungefähr 155,52 MHz gewonnen. Das Schreibtaktsignal ST wird einer Steueranordnung 8, die Vergleicher und Zähler enthält, und einem Schreibadressengenerator 9 zugeführt. Ein Beispiel für eine Steueranordnung 8 ist in der EP-A2-0 435 384 aufgeführt. Bei der Steueranordnung der oben genannten Europäischen Patentanmeldung werden Steuersignale für einen Zähler erzeugt, der zum Einschreiben von Nutzdatenbytes für einen VC-4 dient. Die Steueranordnung 8 arbeitet auf ähnliche Weise wie die in der EP-A2-0 435 384 beschriebene Steueranordnung und dient zur Steuerung des Schreibvorgangs von Bytes einer VC-12 mittels eines Steuersignals.

Den Lesevorgang aus dem Pufferspeicher 6 steuert ein als Zähler realisierter Leseadressengenerator 10, der ein Lesetaktsignal LT mit einer Frequenz von ungefähr 2,048 MHz von einer aus einem Regler und Stellglied dienenden Schaltung 11 erhält. Eine solche Schaltungsanordnung 11 ist ebenfalls aus der EP-A2-0 435 384 bekannt. Hierbei wird das Lesetaktsignal LT aus einem Taktsignal eines lokalen, beispielsweise in der Schaltung 11 befindlichen Taktgenerators abgeleitet. Dieses Taktsignal kann auch von dem Taktgenerator der Sendeeinheit 1 geliefert werden. Die Adressen, die der Schreibadressengenerator 9 und der Leseadressengenerator 10 jeweils erzeugen, werden einer Differenzanordnung 12 zugeführt, die einen Differenzwert bildet, der an die Schaltung 11 geliefert wird. Die aus dem Pufferspeicher 6 ausgelesenen Bytes werden einer Detektionsschaltung 13 zugeführt, die das vorgegebene Byte durch eine Mustererkennung ermittelt. Hierbei können bestimmte aufeinanderfolgende Bytes ein vorgegebenes Muster aufweisen. Wird ein solches Muster erkannt, ist eines dieser Bytes dann das gesuchte vorgegebene Byte. Ein solcher in der Fig. 7 beschriebenen Desynchronisierer 2 oder 4 gibt entweder ein Signal als Startsignal an die Auswerteeinheit 5 oder ein als Stoppsignal ausgebildetes Signal an die Auswerteeinheit 5.

Der in der Auswerteeinheit 5 ermittelte Zählerstand nach Erhalt des Stoppsignals wird an die nicht dargestellte Anzeigeeinheit weitergegeben, die aus dem Zählerwert die Phasenabweichung berechnet.

## Patentansprüche

1.  Meßvorrichtung zum Messen der Phasenabweichung wenigstens einer untergeordneten Transporteinheit eines über ein synchrones Übertragungssystem (3) übertragenen synchronen Signales

    -   mit einer Sendeeinheit (1) zur Bildung des zu sendenden synchronen Signales;
    -   mit einem ersten Desynchronisierer (2) zur Zwischenspeicherung von im zugeführten synchronen Signal enthaltenden Daten der untergeordneten Transporteinheit und zur Erzeugung eines Startsignals nach der Detektierung wenigstens eines vorgegebenen Bytes der untergeordneten Transporteinheit;
    -   mit einem zweiten Desynchronisierer (4) zur Zwischenspeicherung der im empfangenen, das Übertragungssystem (3) durchlaufenden synchronen Signal enthaltenden Daten der untergeordneten Transporteinheit und zur Erzeugung eines Stoppsignals nach der Detektierung wenigstens des vorgegebenen Bytes der untergeordneten Transporteinheit im empfangenen synchronen Signal; und
    -   mit einer Auswerteeinheit (5), die unter Ansprechen auf das Start- und Stoppsignal die Phasenabweichung der untergeordneten Transporteinheit berechnet.

2.  Meßvorrichtung nach Anspruch 1,
    <u>dadurch gekennzeichnet,</u>
    daß der erste und zweite Desynchronisierer (2,4) jeweils wenigstens

- einen Pufferspeicher (6) zur Zwischenspeicherung von im zugeführten synchronen Signal enthaltenen Daten einer untergeordneten Transporteinheit,
- einen Schreibadressengenerator (9) zum Empfang eines aus dem zugeführten synchronen Signal gewonnenen Schreibtaktsignals und zur Steuerung des Schreibvorgangs der Daten in den Pufferspeicher (6),
- eine Steueranordnung (8) zur Bildung eines Steuersignals für den Schreibadressengenerator (9) aus dem zugeführten synchronen Signal,
- einen Leseadressengenerator (10) zur Steuerung des Lesevorgangs der Daten aus dem Pufferspeicher (6),
- eine Differenzanordnung (12) zur Bildung von Differenzwerten aus den Adressen von Schreib- und Leseadressengenerator (9, 10),
- eine Schaltung (11) zur Erzeugung eines dem Leseadressengenerator zugeführten Lesetaktsignals aus den Differenzwerten und
- eine Detektionsschaltung (13) zur Erkennung des vorgegebenen Bytes aus den aus dem Pufferspeicher (6) ausgelesenen Bytes oder aus den in den Pufferspeicher (6) zu schreibenden Bytes der untergeordneten Transporteinheit enthält.

3.  Meßvorrichtung nach Anspruch 1 oder 2,
    dadurch gekennzeichnet, daß die Answerteeinheit (5) einen mit dem ersten (2) und zweiten Desynchronisierer (4) verbundenen Zähler aufweist.

4.  Meßvorrichtung nach Anspruch 1, 2 oder 3,
    dadurch gekennzeichnet,

    daß das synchrone Signal ein STM-1-Signal der synchronen digitalen Hierachie (SDH) ist und
    daß eine untergeordnete Transporteinheit ein virtueller Container VC-2, VC-12 oder VC-11 oder eine Transporteinheit eines plesiochronen in einem VC-2, VC-12 oder VC-11 transportierten Signals ist.

**Claims**

1.  Measurement apparatus for measuring the phase error of at least one lower-level transport unit of a synchronous signal transmitted via a synchronous transmission system (3),

    - having a transmission unit (1) for forming the synchronous signal to be transmitted;
    - having a first desynchronizer (2) for buffer-storage of data (which are contained in the supplied synchronous signal) of the lower-level transport unit and for producing a start signal after the detection of at least one predetermined byte of the lower-level transport unit;
    - having a second desynchronizer (4) for buffer-storage of the data (which are contained in the received synchronous signal which passes through the transmission system (3)) of the lower-level transport unit and for producing a stop signal after detection of at least the predetermined byte of the lower-level transport unit in the received synchronous signal; and
    - having an evaluation unit (5) which, in response to the start and stop signal, calculates the phase error of the lower-level transport unit.

2.  Measurement apparatus according to Claim 1,
    characterized
    in that the first and second desynchronizer (2, 4) each contain at least

    - a buffer store (6) for buffer-storage of data (which are contained in the supplied synchronous signal) of a lower-level transport unit,
    - a write address generator (9) for reception of a write clock signal obtained from the supplied synchronous signal and for controlling the process of writing the data to the buffer store (6),
    - a control arrangement (8) for forming a control signal for the write address generator (9) from the supplied synchronous signal,
    - a read address generator (10) for controlling the process of reading the data from the buffer store (6),
    - a subtraction arrangement (12) for forming difference values from the addresses of the write and read address generators (9, 10),
    - a circuit (11) for producing a read clock signal, which is supplied to the read address generator, from the difference values and
    - a detection circuit (13) for identifying the predetermined byte from those bytes which are read from the buffer store (6) or from those bytes which are to be written to the buffer store (6) from the lower-level transport unit.

3. Measurement apparatus according to Claim 1 or 2, characterized in that the evaluation unit (5) has a counter which is connected to the first desynchronizer (2) and the second desynchronizer (4).

4. Measurement apparatus according to Claim 1, 2 or 3,
   <u>characterized</u>
   in that the synchronous signal is an STM-1 signal in the synchronous digital hierarchy (SDH), and in that a lower-level transport unit is a virtual container VC-2, VC-12 or VC-11 or a transport unit of a plesiochronous signal transported in a VC-2, VC-12 or VC-11.

**Revendications**

1. Appareil de mesure pour mesurer le décalage de phase d'un signal synchrone d'au moins une unité de transport subordonnée, transmis par un système de transmission synchrone (3)

   - avec une unité d'émission (1) pour former le signal synchrone à émettre;
   - avec un premier désynchronisateur (2) pour le stockage intermédiaire des données de l'unité de transport subordonnée, contenant le signal synchrone qui lui est acheminé, et pour la génération d'un signal de départ après la détection d'au moins un mot binaire précédent de l'unité de transport subordonnée;
   - avec un second désynchronisateur (4) pour le stockage intermédiaire des données de l'unité de transport subordonnée, contenant le signal synchrone reçu et qui traverse le système de transmission (3), et pour la génération d'un signal d'arrêt après la détection dans le signal synchrone reçu, du mot binaire précédent au moins de l'unité de transport subordonnée; et
   - avec une unité de traitement (5) qui calcule le décalage de phase de l'unité de transport subordonnée en réponse au signal de départ et d'arrêt;

2. Appareil de mesure selon la revendication 1, caractérisé en ce que le premier et le second désynchronisateurs (2, 4) contiennent respectivement au moins

   - une mémoire tampon (6) pour le stockage intermédiaire des données d'une unité de transport subordonnée, contenant le signal synchrone qui lui est acheminé,
   - un générateur d'adresses d'écriture (9) pour la réception d'un signal d'horloge d'écriture obtenu à partir du signal synchrone qui est acheminé, et pour la commande du processus d'écriture des données dans la mémoire tampon (6),
   - un dispositif de commande (8) pour former un signal de commande pour le générateur d'adresses d'écriture (9) à partir du signal synchrone qui est acheminé,
   - un générateur d'adresses de lecture (10) pour la commande du processus de lecture des données à partir de la mémoire tampon (6),
   - un dispositif différentiel (12) pour former des valeurs différentielles à partir des adresses des générateurs d'adresses d'écriture et de lecture (9, 10),
   - un circuit (11) pour générer à partir des valeurs différentielles, un signal d'horloge de lecture acheminé vers le générateur d'adresses de lecture
   - un circuit de détection (13) pour reconnaître le mot binaire précédent dans les mots binaires lus à partir de la mémoire tampon (6) ou dans les mots binaires à écrire dans la mémoire tampon (6) de l'unité de transport subordonnée.

3. Appareil de mesure selon la revendication 1 ou 2, caractérisé en ce que l'unité de traitement (5) présente un compteur relié au premier (2) et au second désynchronisateurs (4).

4. Appareil de mesure selon la revendication 1, 2 ou 3, caractérisé en ce que le signal synchrone est un signal STM-1 de la hiérarchie numérique synchrone (SDH: "Synchronen Digitalen Hierarchie") et en ce qu'une unité de transport subordonnée est un conteneur virtuel VC-2, VC-12 ou VC-11 ou une unité de transport d'un signal plésiochrone transporté dans un VC-2, VC-12 ou VC-11.

FIG. 1

FIG. 2

FIG. 3

FIG. 4

SOH

AU-Pointer

63 * TU-Pointer

SOH

AU-Pointer

63 * TU-Pointer

## FIG. 5

1

2

5

3

4

## FIG. 6

FIG. 7